Europäisches Patentamt

European Patent Office

Office européen des brevets

(11) Veröffentlichungsnummer: **0 205 897 B1**

(12) **EUROPÄISCHE PATENTSCHRIFT**

(45) Veröffentlichungstag der Patentschrift: **16.10.91**

(21) Anmeldenummer: **86106610.8**

(22) Anmeldetag: **15.05.86**

(51) Int. Cl.⁵: **H01H 11/04**, H01H 1/02, H01H 33/70, C04B 37/02, B23K 35/30

(54) Abbrandkontaktstück und Verfahren zur Herstellung eines solchen Abbrandkontaktstückes oder eines vergleichbaren Bauteils.

(30) Priorität: 24.06.85 CH 2676/85
23.08.85 CH 3650/85

(43) Veröffentlichungstag der Anmeldung:
30.12.86 Patentblatt 86/52

(45) Bekanntmachung des Hinweises auf die
Patenterteilung:
16.10.91 Patentblatt 91/42

(84) Benannte Vertragsstaaten:
CH DE FR GB IT LI SE

(56) Entgegenhaltungen:
DE-A- 2 527 325      DE-A- 2 527 326
DE-B- 1 210 300      FR-A- 2 181 699
FR-A- 2 203 151      GB-A- 817 659
GB-A- 2 066 291      US-A- 3 946 183
US-A- 4 426 033

CHEMICAL ABSTRACTS, Band 102, Nr. 24, 17.
Juni 1985, Seite 269, Nr. 208107x, Columbus,
Ohio, US; & JP-A-60 26 633 (HITACHI, LTD)
09-02-1 985

CHEMICAL ABSTRACTS, Band 76, Nr. 10,
März 1972, Seite 193, Nr. 48854c, Columbus,
Ohio, US; KOKINA et al: "Solder for joining of
graphite-carbon electrodes with steel conductors", & OTKRYTIYA, IZOBRET., PROM.
OBRAZTSY, TOVARNYE ZNAKI 1971, 48(32),
27

(73) Patentinhaber: **BBC Brown Boveri AG**
**Haselstrasse**
**CH-5401 Baden(CH)**

(72) Erfinder: **Gessinger, Gernot, Dr.**
**Heigelweg 17**
**CH-5413 Birmenstorf(CH)**
Erfinder: **Sebalj, Renata**
**Im Bettliacher 16**
**CH-5406 Rütihof-Baden(CH)**
Erfinder: **Widl, Wolfgang, Dr.**
**Industriestrasse 11**
**CH-8152 Glattbrugg(CH)**

## Beschreibung

Bei der Erfindung wird ausgegangen von einem Abbrandkontaktstück nach dem ersten Teil von Anspruch 1 sowie von einem Verfahren nach dem ersten Teil von Anspruch 7.

Hierbei nimmt die Erfindung auf einen Stand der Technik Bezug, wie er in der DE-A-2527325 und in der DE-A-2527326 beschrieben ist. Ein nach dem Stand der Technik ausgeführter, elektrischer Schalter weist zwei längs einer Achse miteinander in oder ausser Eingriff bringbare Abbrandkontaktstücke auf, von denen zumindest eines in koaxialer Anordnung einen längs der Achse erstreckten Kontaktträger mit einer mit dem Kontaktträger verbundenen kohlenstoffhaltigen Lichtbogenelektrode enthält. Die Verbindung zwischen Lichtbogenelektrode und Kontaktträger wird mittels eines Lotes auf der Basis von Ag, Au, Cu oder Ni sowie einer karbidhaltigen Metallschicht auf der Basis von Cr erreicht. Durch eine solche kohlenstoffhaltige Lichtbogenelektrode wird der Kontaktabbrand des betreffenden Abbrandkontaktstückes gegenüber einem metallischen Abbrandkontaktstück verringert. Die beim Ein- und Ausschalten eines elektrischen Schalters auftretenden mechanischen Kräfte vermag ein Abbrandkontaktstück mit einer kohlenstoffhaltigen Lichtbogenelektrode jedoch nur sehr bedingt aufzunehmen.

Aus Chemical Abstracts, Band 102, Nr. 24, 17. Juni 1985, Seite 269, Nr. 208107 sowie JP-A-6026633 ist es bekannt, Keramik oder Graphit miteinander oder mit einem Metall oder einer Legierung zu verbinden, indem zwischen die zu verbindenden Teile eine pulverförmige Cu-Legierung, welche Ti und/oder Zr sowie Si, Mg, Ge, Mn und/oder Sn enthält, eingefügt wird.

In Chemical Abstracts, Band 76, Nr. 10, März 1972, Seite 193, Nr. 48854c, ist ein Lot beschrieben, welches der Verbindung von Graphit-Kohlenstoff-Elektroden mit Stahlleitern dient. Dieses Lot enthält 31 - 38 % Zn (oder bis zu 10 % Sn), 5 - 20 % Ti oder Zr, bis zu 1,5 % Si und als Rest Cu.

Die Erfindung, wie sie in den Ansprüchen gekennzeichnet ist, löst die Aufgabe, ein Abbrandkontaktstück der gattungsgemässen Art zu schaffen, welches unter Beibehaltung eines geringen Kontaktabbrandes eine hohe mechanische Festigkeit aufweist, und gleichzeitig ein Verfahren anzugeben, durch welches in einfacher Weise ein derartiges Abbrandkontaktstück oder ein vergleichbares Bauteil hergestellt werden können.

Das erfindungsgemässe Abbrandkontaktstück zeichnet sich bei einem geringen Kontaktabbrand durch eine hohe Schlagfestigkeit und ein pseudoplastisches Bruchverhalten aus. Hierdurch ist es möglich, die Abbrandkontaktstücke eines elektrischen Schalters mit hoher Geschwindigkeit miteinander in oder ausser Eingriff zu bringen, ohne dass Beschädigungen der miteinander kontaktierten oder voneinander getrennten, lichtbogentragenden Teile der Abbrandkontaktstücke zu befürchten sind. Durch das erfindungsgemässe Verfahren lassen sich in zuverlässiger und reproduzierbarer Weise Abbrandkontaktstücke oder vergleichbare Bauteile herstellen, welche auf kohlefaserhaltigen Verbundwerkstoffen beruhen.

Weitere Eigenschaften und Vorteile der Erfindung werden nachfolgend anhand von in der Zeichnung dargestellten und die Erfindung nicht beschränkenden Ausführungsbeispielen näher erläutert.

Hierbei zeigt:

Fig. 1    eine Aufsicht auf eine axial geschnittene Ausführungsform eines als Druckgasschalter ausgeführten und in Hochspannungsschaltanlagen verwendeten elektrischen Schalters nach der Erfindung, wobei in der linken Hälfte der Zustand in der Einschaltposition und in der rechten Hälfte der Zustand während des Ausschaltens dargestellt sind.

Fig. 2    eine Aufsicht auf einen Schnitt durch eine Vorrichtung zur Durchführung des Verfahrens nach der Erfindung, und

Fig. 3    eine Aufsicht auf eine axial geschnittene Ausführungsform eines Abbrandkontaktes für den elektrischen Schalter nach Fig. 1.

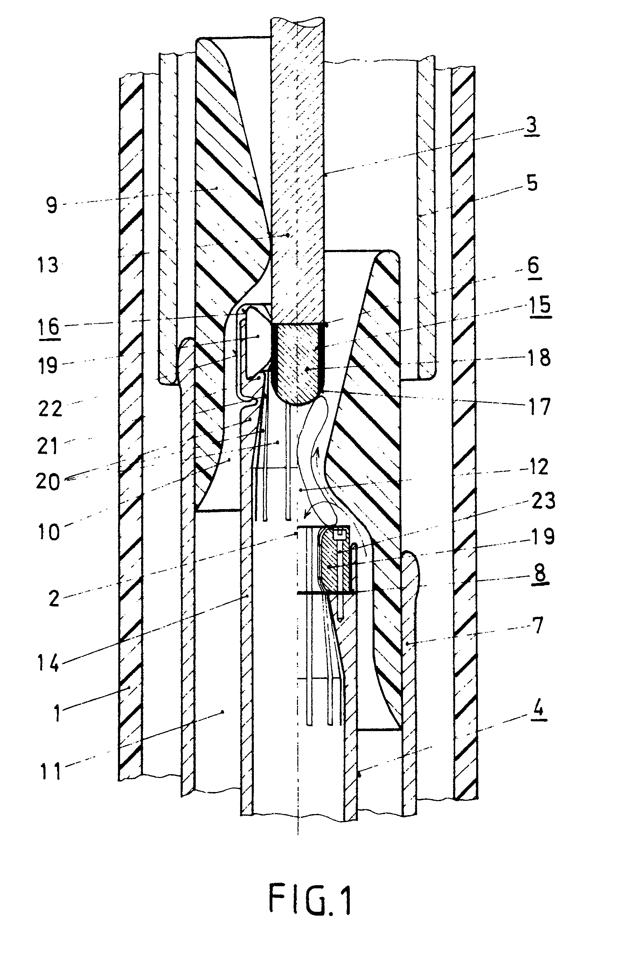

In Fig. 1 bezeichnet 1 ein im wesentlichen hohlzylindrisch ausgebildetes und etwa aus Isolierstoff bestehendes Gehäuse. Dieses Gehäuse 1 ist mit einem Isoliergas, wie etwa Schwefelhexafluorid von einigen bar Druck gefüllt. Es enthält zwei längs einer Achse 2 miteinander in oder ausser Eingriff bringbare Schaltstücke 3 und 4. Das Schaltstück 3 ist in elektrisch leitender Weise mit einem nicht dargestellten Stromanschluss verbunden und enthält einen feststehenden Nennstromkontakt 5 sowie ein feststehendes, beispielsweise vollzylindrisch ausgebildetes, Abbrandkontaktstück 6. Das Schaltstück 4 ist ebenfalls in elektrischer leitender Weise mit einem ebenfalls nicht dargestellten weiteren Stromanschluss verbunden und enthält einen beweglichen Nennstromkontakt 7 sowie ein bewegliches, beispielsweise hohlzylindrisch ausgebildetes, Abbrandkontaktstück 8. Der bewegliche Nennstromkontakt 7 trägt auf einem Teil seiner Innenfläche eine Isolierdüse 9, welche die Abbrandkontaktstücke 6 und 8 koaxial umgibt und welche zusammen mit dem beweglichen Abbrandkontaktstück 8 einen Ringkanal 10 begrenzt, durch den beim Ausschalten in einem Druckgasspeicher 11 befindliches und beispielsweise durch Lichtbogenaufheizung oder mechanische Arbeit komprimiertes Isoliergas in die beim Ausschalten zwischen den beiden Abbrandkontaktstücken 6, 8 gebildete Lichtbogenzone 12 (Strömungspfeile in der rechten Hälfte der Figur) gelangt.

An den einander zugewandten und in der Einschaltposition (linke Hälfte der Figur) miteinander in Eingriff befindlichen freien Enden der Abbrandkontakte 6 bzw. 8 sind auf Kontaktträgern 13 bzw. 14 Lichtbogenelektroden 15 bzw. 16 angebracht.

Die Lichtbogenelektrode 15 ist als massives zylindrisches Teil ausgebildet und enthält zumindest teilweise Kohlenstoffasern und eine Kohlenstoffmatrix, in welche die Kohlenstoffasern eingebettet sind. Die Lichtbogenelektrode 15 weist eine hohe mechanische Festigkeit auf, wenn die Kohlenstoffasern in alle Raumrichtungen orientiert sind oder wenn eine Schicht 17 von Kohlenstofffasern vorwiegend in Umfangsrichtung um die Achse 2 auf einen Graphitkern 18 gewickelt ist. Die Lichtbogenelektrode 15 kann beispielsweise mittels Löten auf dem Kontaktträger 13 befestigt werden. Die Lichtbogenelektrode und der Kontaktträger 13 können auch hohlzylindrisch ausgebildet sein. In diesem Fall enthält die Lichtbogenelektrode 15 vorzugsweise lediglich die Schicht 17 aus gewickelten und in eine Kohlenstoffmatrix eingebetteten Kohlenstoffasern. Solche Schichten 17 lassen sich beispielsweise durch Wickeln nach dem filament winding-Verfahren oder durch Aufwickeln eines Kohlenstoffaser-Gewebes herstellen.

Die Lichtbogenelektrode 16 ist ringförmig ausgebildet und enthält längs der Achse 2 erstreckte Kontaktfinger 19. Die Kontaktfinger 19 enthalten ebenfalls jeweils Kohlenstoffasern und eine Kohlenstoffmatrix, in welche die Kohlenstoffasern eingebettet sind. Hierbei sind die Kohlenstoffasern der Kontaktfinger 19 vorzugsweise zumindest teilweise radial ausgerichtet, da hierdurch eine hohe elektrische und thermische Leitfähigkeit zwecks leichter Abfuhr des Lichtbogenstroms und der Lichtbogenwärme sowie eine besonders hohe mechanische Stabilität der Lichtbogenelektrode 16 insbesondere beim Aufprall während des Einschaltens auf die Lichtbogenelektrode 15 erreicht wird. Solche radial verlaufende Kohlenstoffasern sind beispielsweise in einem Material mit dreidimensional ausgerichteten Kohlenstoffasern vorhanden, können aber auch durch Verwendung eines zweidimensionalen Kohlenstoffaser-Gewebes, dessen erste Faserrichtung radial zur Achse 2 und dessen zweite Faserrichtung axial oder in Umfangsrichtung verläuft, erzielt werden.

Jeder der Kontaktfinger ist auf federnd ausgebildeten Endabschnitten 20 des Kontaktträgers 14 befestigt, so dass in der Einschaltposition (linke Hälfte der Figur) eine gute Kontaktkraft zwischen den Lichtbogenelektroden 15 und 16 besteht. Die Befestigung der Kontaktfinger 19 kann entsprechend der Lichtbogenelektrode 15 durch Löten erfolgen, kann aber auch durch Lagerung der Kontaktfinger 19 auf Absätzen 21 bewirkt werden, welche jeweils auf einer der der Achse 2 zugewandten Innenflächen der Endabschnitte 20 des Kontaktträgers 14 angebracht sind. Die Halterung eines Kontaktfingers 19 auf einem der Absätze 21 kann, wie in der linken Hälfte der Figur angegeben ist, beispielsweise durch eine U-förmig gebogene Blattfeder 22 erfolgen, deren einer Schenkel in eine auf der Aussenseite eines der Endabschnitte 20 angebrachten Vertiefung eingeschnappt ist, und deren anderer Schenkel das dem feststehenden Abbrandkontakt 6 zugewandte freie und in Richtung auf die Achse 2 angeschrägte Ende des Kontaktfingers 19 hintergreift. Wie in der rechten Hälfte der Figur angegeben ist, kann die Halterung eines Kontaktfingers 19 auf einem der Absätze 21 aber auch mittels einer Schraube 23 erfolgen, welche etwa in axialer Richtung vom freien Ende des Kontaktfingers 19 in den Absatz 21 geführt ist.

Beim Ausschalten des Druckgasschalters wird das bewegliche Schaltstück 4 durch einen nicht dargestellten Antrieb nach unten geführt. Der Antrieb kann vergleichsweise schwach ausgebildet sein, da die zu überwindenden Reibungskräfte zwischen den beiden in der Einschaltposition ineinandergefahrenen Abbrandkontaktstücken 6, 8 wegen des geringen Reibungskoeffizienten von Kohlenstoff auch bei hohen Kontaktdrücken gering ist.

Nach Oeffnen der Nennstromkontaktstücke 5, 7 kommutiert der abzuschaltende Strom auf einen über die Abbrandkontaktstücke 6, 8 verlaufende Strompfad. Nach dem Trennen der Abbrandkontaktstücke 6, 8 wird ein Schaltlichtbogen gebildet, dessen Fusspunkte sich auf den Lichtbogenelektroden 15, 16 befinden. Wegen der gegenüber Metallelektroden vergleichsweise hohen Abbrandfestigkeit von Kohlenstoff entstehen nur kleine Mengen an schädlichen Zersetzungsprodukten in der Lichtbogenzone 12, wodurch eine Verschlechterung der Löscheigenschaften des Löschgases - wie etwa durch Metalldampf bei Verwendung von Metallelektroden - ausgeschlossen wird. Der geringe Abbrand der Kohlenstoffelektroden ermöglicht ausserdem eine grössere Anzahl von Kurzschlussabschaltungen ohne Revision des Schalters. Bei Annäherung des abzuschaltenden Stromes an einen Nulldurchgang wird dann der Lichtbogen bei entsprechendem Kontaktabstand, wie durch Strömungspfeile angegeben ist, beblasen.

Beim Einschalten werden die voneinander getrennten Abbrandkontaktstücke 6, 8 durch den nicht dargestellten Antrieb gegeneinander geführt. Im Zuge der Einschaltbewegung können die beiden Lichtbogenelektroden 15, 16 aufeinanderprallen. Ein solches Kontaktprellen ist unschädlich, da wegen der geeigneten Ausrichtung der Kohlenstoffasern deren hohe mechanische Belastbarkeit voll zum Tragen kommt.

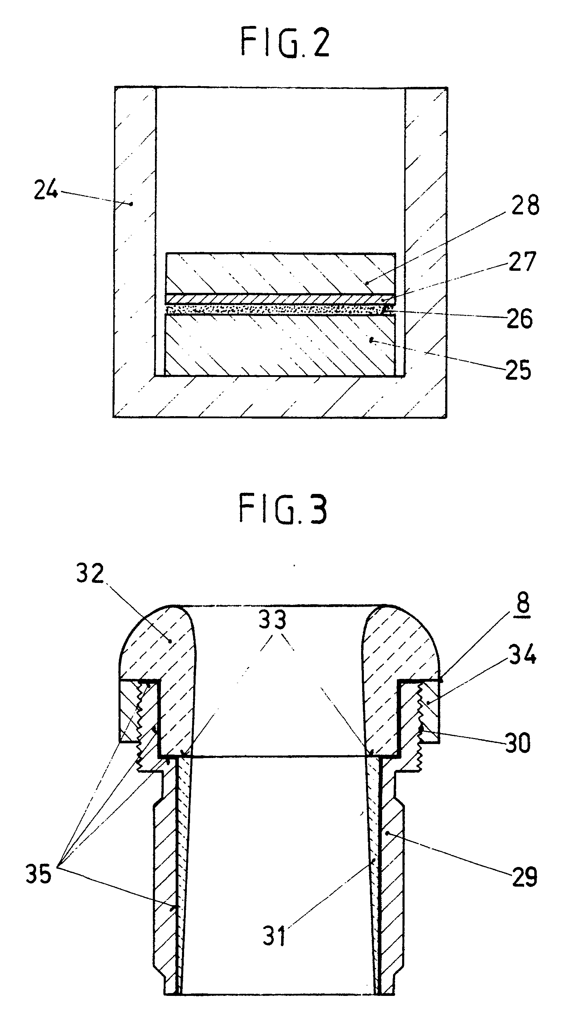

In Fig. 2 ist eine Vorrichtung angegeben, mit deren Hilfe kohlefaserverstärktes Graphit auf einem metallenen Träger verlötet wird. Hierbei bezeichnet 24 einen Schutztiegel aus gesintertem $Al_2O_3$, auf dessen Boden sich ein kohlefaserverstärktes Graphitplättchen 25 befindet. Auf der Oberfläche des Graphitplättchens 25 sind Cr-Partikel 26 in Form einer Paste oder eines Pulvers aufgetragen. Hierauf ist eine Lotfolie 27, z.B. eine Cu/Sn/Ti-Legierung mit 10 Gew.-% Sn und 3 Gew.-% Ti, Rest Cu, gelegt. 28 ist ein mit den Graphitplättchen 25 zu verbindendes Molybdänplättchen. Letzteres kann, falls notwendig, zusätzlich mit einem Gewicht belastet sein (nicht gezeichnet).

Das kohlefaserverstärkte Graphitplättchen 25 wurde mittels eines Hochtemperaturlotes mit dem Molybdänplättchen 28 verbunden. Das kohlefaserverstärkte Graphitplättchen hatte 30 × 40 mm Seitenlänge und 10 mm Dicke. Es wurde flach auf den Boden des Schutztiegels 24 gelegt und mit einer Paste, bestehend aus einer Aufschlämmung der Cr-Partikel 26 in Toluol, bedeckt. Die Cr-Partikel 26 hatten eine Korngrösse von weniger als 40 μm. Hierauf wurde das Ganze getrocknet, um das Lösungsmittel auszutreiben. Die Pulverschicht der Cr-Partikel 26 mass durchschnittlich ca. 0,25 mm. Nun wurde die Lotfolie 27 mit den Abmessungen 30 × 40 mm und einer Dicke von 0,3 mm auf die Pulverschicht gelegt und mit dem Molybdänplättchen 28 von 30 × 40 × 8 mm belastet. Das Hochtemperaturlot hatte die nachfolgende Zusammensetzung:
Sn = 10 Gew.-%
Ti = 3 Gew.-%
Cu = Rest
Die Lotfolie 27 wurde durch Vakuumschmelzen der Komponenten und Warmwalzen hergestellt. Nun wurde das Ganze in einen Vakuumschmelzofen eingebracht und induktiv auf eine Temperatur von 950°C erhitzt und während 5 min auf dieser Temperatur gehalten. Nach der Abkühlung wurde das Verbund-Werkstück einer Zugprobe unterworfen, welche eine ausgezeichnete Haftfestigkeit ergab.

Das Belegen des kohlefaserverstärkten Graphitplättchens mit Cr-Partikeln 26 dient zur Erhöhung der Benetzbarkeit desselben durch das Hochtemperaturlot. Es können dafür ganz allgemein karbidbildende Elemente wie Cr, Ti etc. verwendet werden.

In Fig. 3 ist eine Ausführungsform des beweglichen Abbrandkontaktes 8 des elektrischen Schalters nach Fig. 1 dargestellt. In dieser Figur bezeichnet 29 eine mit einem Gewinde 30 versehene, abgesetzte Hülse aus Stahl: Im vorliegenden Beispiel ein niedriglegierter Stahl mit ca. 0,3 Gew.-%

C, 2,5 Gew.-% Cr sowie weiteren geringen Zusätzen an Mo und V. 31 ist ein konischer Einsatz aus Graphit. Die Lichtbogenelektrode 16 ist als kohlefaserverstärkte Graphitkappe 32 ausgebildet. Letztere ist mittels eines Graphitklebers 33 stirnseitig auf den konischen Graphiteinsatz 31 aufgeleimt. 34 ist ein Ring aus einer W/Cu-Legierung (z.B. 80 Gew.-% W, 20 Gew.-% Cu), welcher als Abschluss dient. Dieser Ring ist mit dem Gewinde 30 auf die Stahlhülse 29 geschraubt. Die gelöteten Flächen zwischen dem Graphiteinsatz 31 und der kohlefaserverstärkten Graphitkappe 32 einerseits und der Stahlhülse 29 andererseits sind mit dem Bezugszeichen 35 versehen. Bei der Herstellung des Abbrandkontaktes 8 wurde zunächst aus einem Rundstab die kohlefaserverstärkte Graphitkappe 32 herausgedreht. Dann wurde dieses Bauteil auf seiner äusseren Mantelfläche mit einer Lotschicht überzogen. Dabei wurde wie folgt verfahren: Im Vakuumschmelzofen wurde eine Schmelze der folgenden Zusammensetzung hergestellt:
Sn = 20 Gew.-%
Ti = 10 Gew.-%
Cu = Rest
Zwecks Halterung und Abdeckung der Innenfläche wurde in die Graphitkappe 32 ein auf deren Innenseite genau passendes, oben mit einer Aufhängevorrichtung versehenes gewöhnliches Graphitstück von unten eingeschoben. Das Ganze wurde nun im oberen Teil der Induktionsspule des Vakuumofens vorgewärmt, in die Schmelze abgesenkt, dort bei einer Temperatur von 950°C während 10 min belassen und langsam wieder aus der Schmelze gezogen. Dabei wurde der Ofen vor dem Eintauchen des Bauteils in die Schmelze kurz mit Argon geflutet, wieder evakuiert und nach dem Herausnehmen und während des Abkühlens des Bauteils nochmals mit Argon geflutet.

Ein zylindrisches Werkstück aus gewöhnlichem Graphit (Marke V 263 der Fa. Steinemann, Otelfingen, Schweiz) mit dem Aussendurchmesser und der Länge des Mantels des Graphiteinsatzes 31 wurde nach dem oben beschriebenen Tauchverfahren auf seiner Mantelfläche mit Hochtemperaturlot belegt. Danach wurde das Material im Kern herausgedreht und der Graphiteinsatz 31 gefertigt. Der halbe Oeffnungswinkel der innenliegenden Kegelfläche betrug 2° 30'. Nun wurden der Graphiteinsatz 31 und die kohlefaserverstärkte Graphitkappe 32 an ihren Stirnseiten mittels des Graphitklebers 33 zusammengeklebt und die vorgefertigte Stahlhülse 29 auf den Graphiteinsatz 31 und die kohlefaserverstärkte Graphitkappe 32 aufgeschrumpft. Der Stahl enthielt neben 0,3 Gew.-% C und 2,5 Gew.-% Cr noch geringe Mengen von Mo und V. Durch das Aufschrumpfen wird eine grössere Sicherheit bei stark unterschiedlichen Ausdehnungskoeffizienten der zu verbindenden Werkstoffe erzielt. Das Ganze wurde hierauf in einen Vakuumofen eingesetzt und bei 950°C während 10 min gelötet. Nach dem Abkühlen wurde noch der Ring 34 aus einer W/Cu-Legierung (80 Gew.-% W, 20 Gew.-% Cu) auf die Stahlhülse 29 aufgeschraubt. Die gelöteten Flächen 35 dieser Verbundkonstruktion sind durch fette Linien hervorgehoben.

Die Erfindung ist nicht auf die Ausführungsbeispiele beschränkt. Ganz allgemein kann das Verfahren zum Verbinden von kohlefaserverstärktem Graphit mit einem metallischen Trägerwerkstoff mittels Hochtemperaturlot auf alle dazu geeigneten Werkstoffe angewendet werden. Als Hochtemperaturlote werden solche auf Cu- und/oder Ag-Basis mit mindestens einem karbidbildenden Element ausgewählt aus der Gruppe Cr, Mo, W, V, Nb, Ta, Ti, Zr, Hf in einer Höhe von 1 bis 10 Gew.-% verwendet. Das Lot kann in geschmolzener Form durch Eintauchen in eine Schmelze, in Pulver-, Folien- oder Filform oder durch Aufdampfen auf den kohlefaserverstärkten Graphit aufgebracht werden. Während des Lötvorgangs wird der Trägerwerkstoff durch Gravitation, Federkraft oder thermomechanische Kräfte (z.B. Schrumpfen) gegen die Lotfläche gepresst. Sowohl zum Aufbringen der Lotschicht wie zur Durchführung des Lötprozesses kann vorteilhafterweise ein Vakuum-(Schmelz-) Ofen benutzt werden.

Zur Verbesserung der Benetzbarkeit des kohlefaserverstärkten Graphits wird vorzugsweise auf die zu lötende Fläche vor dem Löten eine Schicht aus Partikeln eines karbidbildenden Elements (Cr, Ti) in Pulver-, Pasten-oder anderer Form, z.B. als Aufschlämmung in einem Alkohol (Toluol, Aethanol etc.) aufgebracht.

Ausser den in den Beispielen angegebenen Loten eignet sich ferner ein Lot folgender Zusammensetzung:

Cr = 1 Gew.-%
Cu = Rest

## Patentansprüche

1. Abbrandkontaktstück (6,8) in einem elektrischen Schalter mit zwei längs einer Achse (2) miteinander in oder ausser Eingriff bringbaren Kontaktstücken, von denen mindestens eines in koaxialer Anordnung einen längs der Achse (2) erstreckten Kontaktträger (13, 14) und eine auf dem Kontaktträger (13, 14) befestigte, kohlenstoffhaltige Lichtbogenelektrode (15, 16) aufweist, dadurch gekennzeichnet, dass die Lichtbogenelektrode (15, 16) Kohlenstoffasern in einer Kohlenstoffmatrix eingebettet enthält.

2. Abbrandkontaktstück nach Anspruch 1, dadurch gekennzeichnet, dass ein überwiegender Teil der Kohlenstofffasern vorwiegend in Umfangsrichtung um die Achse (2) gewickelt sind.

3. Abbrandkontaktstück nach Anspruch 2, dadurch gekennzeichnet, dass die Kohlenstofffasern auf einen Graphitkern gewickelt sind.

4. Abbrandkontaktstück nach Anspruch 1, dadurch gekennzeichnet, dass die Lichtbogenelektrode (z.B. 16) von Kontaktfingern (19) gebildet ist, die längs der Achse (2) erstreckt auf federnd ausgebildeten Endabschnitten (20) des Kontaktträgers (16) befestigt sind und überwiegend in radialer Richtung ausgerichtete Kohlenstoffasern aufweisen.

5. Abbrandkontaktstück nach Anspruch 4, dadurch gekennzeichnet, dass die Endabschnitte (20) des Kontaktträger (16) auf ihren der Achse (2) zugewandten Innenfläche jeweils einen Absatz (21) aufweisen, auf dem jeweils einer der Kontaktfinger (19) gelagert ist.

6. Abbrandkontaktstück nach Anspruch 5, dadurch gekennzeichnet, dass mindestens einer der Kontaktfinger (19) mittels einer Blattfeder (22) oder einer Schraube (23) am Absatz (21) gehaltert ist.

7. Verfahren zur Herstellung eines Abbrandkontaktstückes (8) nach Anspruch 1, bei dem Graphit mittels eines Hochtemperaturlotes auf der Basis Kupfer und/oder Silber sowie mindestens eines der karbidbildenden Elemente Cr, Mo, W, V, Nb, Ta, Ti, Zr, Hf in einem Gehalt von 1 bis 10 Gew.-% unter Schutzgasatmosphäre oder Vakuum auf einen metallischen Trägerwerkstoff des kontaktträgers gelötet wird und bei dem das Lot in geschmolzener, Pulver-, Folien-, oder Filmform (27) oder durch Aufdampfen auf die zu verbindende Oberfläche des Graphits aufgebracht und das Ganze in einem induktiv beheizten Ofen auf Löttemperatur gebracht und wieder auf Raumtemperatur abgekühlt wird, dadurch gekennzeichnet, dass der metallische Trägerwerkstoff des kontaktträgers gegen kohlenfaserverstärktes Graphit der Lichtbogenelektrode gepresst wird.

8. Verfahren nach Anspruch 7, dadurch gekennzeichnet, dass zur Verbesserung der Benetzbarkeit des kohlefaserverstärkten Graphits auf dessen mit dem metallischen Trägerwerkstoff zu verbindende Fläche vor dem Löten ein karbidbildendes Element in Form eines in einer organischen Flüssigkeit aufgeschlämmten Pulvers aufgebracht wird.

9. Verfahren nach Anspruch 7, dadurch gekennzeichnet, dass das Hochtemperaturlot durch Eintauchen des Werkstücks aus kohlefaserverstärktem Graphit in eine Schmelze des Lotes auf letzteren aufgebracht wird.

10. Verfahren nach Anspruch 7, dadurch gekennzeichnet, dass der metallische Trägerwerkstoff aus Molybdän besteht und das Hochtemperaturlot aus 99 Gew.-% Cu und 1 Gew.-% Cr oder aus 87 Gew.-% Cu, 10 Gew.-% Sn und 3 Gew.-% Ti besteht.

11. Verfahren nach Anspruch 7, dadurch gekennzeichnet, dass der metallische Trägerwerkstoff aus einem niedriglegierten Stahl mit 0,3 % C, 2,5 Gew.-% Cr und weiteren Zusätzen an Mo und V besteht und das Hochtemperaturlot aus 70 Gew.-% Cu, 20 Gew. % Sn und 10 Gew.-% Ti besteht.

**Claims**

1. Arcing contact tip (6, 8) in an electric circuit breaker having two contact tips which can be brought into or out of engagement with each other along an axis (2) and at least one of which is provided with a contact carrier (13, 14) extending along the axis (2) and a carbon-containing arc electrode (15, 16) mounted on the contact carrier (13, 14) in coaxial arrangement, characterised in that the arc electrode (15, 16) contains carbon fibres embedded in a carbon matrix.

2. Arcing contact tip according to Claim 1, characterised in that a predominant proportion of the carbon fibres is wound mainly in the peripheral direction around the axis (2).

3. Arcing contact tip according to Claim 2, characterised in that the carbon fibres are wound on to a graphite core.

4. Arcing contact tip according to Claim 1, characterised in that the arc electrode (for example 16) is formed by contact fingers (19) which are mounted, extending along the axis (2), on elastically constructed end sections (20) of the contact area (16) and are provided with carbon fibres which are predominantly aligned in the radial direction.

5. Arcing contact tip according to Claim 4, characterised in that the end sections (20) of the contact carrier (16) have in each case on their inside surface facing the axis (2) a shoulder (21) on which in each case one of the contact fingers (19) is supported.

6. Arcing contact tip according to Claim 5, characterised in that at least one of the contact fingers (19) is retained at the shoulder (21) by means of a leaf spring (22) or a screw (23).

7. Method for producing an arcing contact tip (6, 8) according to Claim 1, in which graphite is soldered onto a metallic carrier material of the contact carrier by means of a high-temperature solder based on copper and/or silver and at least one of the carbide-forming elements Cr, Mo, W, V, Nb, Ta, Ti, Zr, Hf in a content of 1 to 10% by weight, under a protective gas atmosphere or a vacuum, and in which the solder is applied in molten, powder, foil or film form (27) or by vapour deposition onto the surface of the graphite to be joined, and the composite is brought to soldering temperature in an inductively heated furnace and is cooled down again to room temperature, characterised in that the metallic carrier material of the contact carrier is pressed against carbon-fibrereinforced graphite of the arc electrode.

8. Method according to Claim 7, characterised in that, for improving the wettability of the carbon-fibrereinforced graphite, a carbide-forming element in the form of a powder slurried in an organic liquid is applied to its surface to be joined to the metallic carrier material.

9. Method according to Claim 7, characterised in that the high-temperature solder is applied to the workpiece by immersing the workpiece of carbon-fibre-reinforced graphite into a melt of the solder.

10. Method according to Claim 7, characterised in that the metallic carrier material consists of molybdenum and the high-temperature solder consists of 99% by weight Cu and 1% by weight Cr or of 87% by weight Cu, 10% by weight Sn and 3% by weight Ti.

11. Method according to Claim 7, characterised in that the metallic carrier material consists of a low-alloy steel having 0.3% by weight C, 2.5% by weight Cr and other additives of Mo and V and the high-temperature solder consists of 70% by weight Cu, 20% by weight Sn and 10% by weight Ti.

**Revendications**

1. Contact d'usure (6, 8) dans un commutateur électrique avec deux pièces de contact qui peuvent être mises en contact ou séparées l'une de l'autre le long d'un axe (2), dont au moins une présente, en montage coaxial, un porte-contact (13, 14) s'étendant le long de l'axe (2) et une électrode d'arc (15, 16) carbonée, fixée sur le porte-contact (13, 14), caractérisé en ce que l'électrode d'arc (15, 16) contient des fibres de carbone noyées dans une matrice de carbone.

2. Contact d'usure suivant la revendication 1, caractérisé en ce qu'une partie prépondérante des fibres de carbone sont enroulées en direction principalement tangentielle autour de l'axe (2).

3. Contact d'usure suivant la revendication 2, caractérisé en ce que les fibres de carbone sont enroulées sur un noyau en graphite.

4. Contact d'usure suivant la revendication 1, caractérisé en ce que l'électrode d'arc électrique (par exemple 16) est formée par des doigts de contact (19), s'étendant le long de l'axe (2), qui sont fixés à des tronçons d'extrémité élastiquement constitués (20) du porte-contact (14) et présentent des fibres de carbone orientées principalement en direction radiale.

5. Contact d'usure suivant la revendication 4, caractérisé en ce que les tronçons d'extrémité (20) du porte-contact (14) présentent chacun sur leur surface intérieure tournée vers l'axe (2) une butée (21), sur chacune desquelles un des doigts de contact (19) prend appui.

6. Contact d'usure suivant la revendication 5, caractérisé en ce qu'au moins un des doigts de contact (19) est maintenu sur la butée (21) au moyen d'une lame de ressort (22) ou d'une vis (23).

7. Procédé pour fabriquer un contact d'usure (6, 8) suivant la revendication 1, dans lequel du graphite est brasé, sous atmosphère protectrice ou sous vide, sur un matériau métallique de support du porte-contact au moyen d'un métal de brasage à haute température à base de cuivre et/ou d'argent ainsi que d'au moins un des éléments formateurs de carbure parmi Cr, Mo, W, V, Nb, Ta, Ti, Zr, Hf en une teneur de 1 à 10 % en poids, et dans lequel le métal de brasage est appliqué sous forme fondue, de poudre, de feuille ou de film (27) ou par dépôt de vapeur sur la surface de graphite à assembler et où l'ensemble est porté à la température de brasage dans un four chauffé par induction puis à nouveau refroidi à la température ambiante, caractérisé en ce que le matériau métallique de support du porte-contact est pressé contre le graphite, renforcé par des fibres de carbone, de l'électrode d'arc.

8. Procédé suivant la revendication 7, caractérisé en ce que, pour améliorer la mouillabilité du graphite renforcé par des fibres de carbone, un élément formateur de carbure sous la forme d'une poudre en suspension dans un liquide organique est déposé, avant le brasage, sur sa surface à assembler avec le matériau métallique de support.

9. Procédé suivant la revendication 7, caractérisé en ce que le métal de brasage à haute température est appliqué sur la pièce en graphite renforcé par des fibres de carbone par immersion de cette dernière dans un bain de fusion du métal de brasage.

10. Procédé suivant la revendication 7, caractérisé en ce que le matériau métallique de support se compose de molybdène et en ce que le métal de brasage à haute température se compose de 99 % en poids de Cu et 1 % en poids de Cr ou de 87 % en poids de Cu, 10 % en poids de Sn et 3 % en poids de Ti.

11. Procédé suivant la revendication 7, caractérisé en ce que le matériau métallique de support se compose d'un acier faiblement allié contenant 0,3 % de C, 2,5 % en poids de Cr et d'autres additions de Mo et V et en ce que le métal de brasage à haute température se compose de 70 % en poids de Cu, 20 % en poids de Sn et 10 % en poids de Ti.

FIG.1

# FIG.2

# FIG.3